# EUROPEAN PATENT APPLICATION

(11) **EP 1 653 597 A1**
(43) Date of publication of application: **03.05.2006**
(21) Application number: 05109819.2
(22) Date of filing: 21.10.2005
(51) Int. Cl.: H02M 3/157, H02M 7/162

(54) **Circuit arrangement for switched power supply**

(30) Priority: 28.10.2004 EP 04105352
(71) Applicant: INVENTIO AG, CH-6052 Hergiswil (CH)
(72) Inventor: Atsushi Kotsubo, Carlos, 01532-020, São Paulo (BR)
(74) Representative: Gaussmann, Andreas

(57) **Abstract**

The invention relates to circuit arrangement for providing a switched power supply to an electrical device (15) comprising: a microcontroller (19,42) for controlling the electrical device (15); a reference voltage regulator (18,41) coupled to the microcontroller (19,42) for supplying a reference voltage (V_{ref}) and an output power circuit (20,43) coupled to the electrical device (15) for supplying a switched power output voltage (V_{O}) having an output current (I_{O}) required to drive the electrical device (15) in an intended status. The microcontroller (19,42) is coupled to the output power circuit (20,43) for supplying a control signal (PWM, A_{T}) and coupled to the electrical device (15) for supplying an output signal (S) for setting the electrical device (15) into the intended status, wherein the microcontroller (19,42) is determining the control signal (PWM, A_{T}) in dependence of the output signal (S).

## Description

The invention relates to a circuit arrangement for providing a switched power supply to an electrical device comprising: a reference voltage regulator, a microcontroller and an output power circuit. Further it relates to a method for providing a switched power supply to an electrical device. The circuit arrangement and the method may be used in an elevator system comprising: an elevator car driven in a hoistway, a main control unit communicating with a floor/car control unit arranged on a floor of a building or in the elevator car; at least one electrical device arranged on the floor of a building or in the elevator car; the electrical device is controlled by the floor/car control unit.

An elevator system includes a plurality of electrical devices distributed over a plurality of floors in a building or in the elevator car. These electrical devices are provided for controlling the elevator car, i.e. a keypad for inputting a destination floor. Such keypad may comprise a number of keys and a display. Further electrical devices are used for signaling and informing users, i.e. a display indicating the position or the direction of travel of the elevator car. Such displays are known as arrows, position indicators in the form of seven segments displays or dot matrix displays. They are further used as data, time, temperature and messaging displays. The electrical devices are controlled by a floor or car control unit comprising a microcontroller. The microcontroller outputs the output signals to set the electrical devices into an intended status. Further the communication of the floor/car control unit with a main control unit is performed by the microcontroller. The microcontroller further receives input signals generated by the electrical devices, such as signals after a key pressing. This input signals are processed by the microcontroller and transmitted to the main control unit of the elevator system.

Independently of the use all electrical devices need an electrical power supply. Since the electrical power supply especially in elevator systems has to be transmitted over a plurality of floors requiring a long cable a high voltage is used normally to decrease transmitting losses. The high transmission voltage is used to apply a reduced cable cross section, since the cable has some intrinsic resistance per length. The intrinsic resistance is higher for smaller cable cross sections. So if high voltages are used to transmit the electrical power to the respective electrical devices on the floors and/or in the elevator car the required current is reduced allowing a reduced cable cross section. The most electrical devices used on the floors and in the elevator car are driven with low voltages so the high transmission voltage has to be stepped down.

A first possibility to supply these electrical devices is to limit the high transmission voltage by resistors provided in line with the electrical devices. This possibility is very inefficient in respect to the power consumption, since the electrical power is transformed mostly in heat. A further possibility is to use a switched power supply, which supplies the required low voltages and high currents to the electrical devices in dependence on the amount of electrical power needed by the electrical device. This solution provides a higher power consumption efficiency. However the components required for providing such switched power supply are costly. Mostly dedicated analog circuits are used for providing a switched power supply to electrical devices. These dedicated analog circuits providing a control signal to the output power circuit for determining the output current to be supplied to the electrical device.

There are several solutions known in the prior art for supplying electrical devices over long cable length. The DE 101 29 779 A1 describes an elevator capable of supplying electric power to accessory hall devices such as up/down buttons and position indicators without requiring power supply lines between the cage and each hall. Normally the electric power is supplied directly via the long cables to the up/down buttons and the position indicator installed in each elevator hall from the elevator machine chamber. Thus, a voltage drop across the cables increases as the building in which the elevator is installed becomes higher. Thus, as the length of cables increases, its diameter must be increased, which would lead to an increase in costs. The DE 101 29 779 A1 overcomes the problem of long cable length by using a drive battery which supplies electric power to electrical devices provided in each hall. When the charging voltage of the battery drops below a predetermined voltage value, the cage stops automatically at the floor and the charger charges the drive battery in the hall of the floor via a receptor and feeder. This solution is very complicated, since additionally components must be installed to charge the battery. Further the contacts for charging the battery are subject of friction and abrasion.

Further there are known solutions for transforming a high input voltage having a low current into a low voltage having a higher current.

The JP 04244745 A describes a system for stepping up a battery voltage by using a converter in case of an emergency.

The JP 2000255918 A discloses a system to optimize the selection of a power supply by providing a switching control part for switching the power source to be supplied to an electrical motor to an AC power source or a power accumulation device according to time.

The JP 11296141 A describes a system having a display device for an elevator, wherein a pulse width of an output permit signal is extended if the luminance of display characters is reduced.

Therefore it is an object of the present invention to provide a circuit arrangement and a method for providing a power supply to electrical devices, which increase the power consumption efficiency and decrease the cost for the used components.

The object is solved by the features of the independent claims.

The invention bases on the though, that a switched power supply represents the most efficient possibility. However the dedicated analog circuits used for providing a control signal to the output power circuit are expensive. The task of such dedicated circuits is to calculate a control signal very fast, which is supplied to the output power circuit. The output power circuit is adjusting the output current for the electrical device in dependence of the control signal. The speed for calculating the control signal is important to provide a steady output current very fast. Electrical devices are controlled by a microcontroller. Such microcontroller outputs the output signals to the electrical device setting the electrical device into an intended status. Further the microcontroller is receiving input signals from the electrical devices. So a microcontroller is used for several tasks in cases of controlling electrical devices.

Basically a microcontroller is able to provide the control signal for adjusting the output current in the output power circuit also. However the speed for providing of the correct control signal is too slow compared with dedicated analog circuits. This disadvantage of a microcontroller could be overcome, since the output currents required for driving the electrical devices in different statuses are known in several applications. The invention uses the knowledge of the required output currents for different statuses of the electrical devices. At the moment the microcontroller is setting the electrical device into another status by applying an output signal to the electrical signal, the corresponding control signal for the status will be adapted and outputted to the output power circuit too. So no time consuming adjustments of the control signal are required. The output power circuit will provide the correct output current for driving the electrical device in the intended status immediately.

By applying the inventive circuit arrangement using known output currents it is possible to use a microcontroller for providing a control signal. Thus no expensive dedicated analog circuits are required. Since microcontrollers are mostly used to control the electrical devices, such microcontroller could be used to generate the control signal to control the output power circuit also. The inventive switched power supply is applicable in all cases where the required output currents for the statuses of the electrical device are known.

In a preferred embodiment of the invention the control signal of the microcontroller is determined if the output signal for setting the status of the electrical device is changed. So the microcontroller has to monitor the output signal for setting the status. If the status is changed the microcontroller has to set the control signal for the output power circuit newly. Thus the determining of the control signal is very easily to perform.

In a further preferred embodiment of the invention a voltage feedback signal is supplied to the microcontroller. This voltage feedback signal is used for fine tuning the control signal supplied to the output power circuit.

It is further preferred to connect the microcontroller with a main control unit of a system. So the main control unit can control the output signals, which are provided to and processed by the microcontroller. The microcontroller outputs the output signals to the respective electrical devices to set the respective electrical device into the intended statuses. Further the microcontroller is sending input signals generated by the electrical devices to the main control unit.

In a further preferred embodiment of the invention the reference voltage generated by the reference voltage regulator is a low voltage reference signal. This low voltage is provided to the microcontroller for power supply of the microcontroller. It is further used for comparing the switched power output voltage with the reference voltage to determine whether the control signal has to be changed or not. The switched power output voltage is also a low voltage but a high current signal. It is required to drive the electrical device in the intended status. Both voltages the low voltage reference signal and the switched power output voltage are generated from an input voltage supplied to the reference voltage regulator and to the output power circuit.

It is further possible to arrange a comparator for comparing the reference voltage and the switched power output voltage to determine whether the control signal has to be changed or not. Such comparator supplies a comparison result to the microcontroller, which is used for adjusting the control signal correspondingly.

It is advantageously to store a mapping of output signals for different statuses and corresponding output currents to the respective control signals in the microcontroller. So the microcontroller has to read the output signal and to derive the corresponding control signal only. Thus the processing of the control signal is very simply.

In a preferred embodiment of the invention the input voltage supplied to the reference voltage regulator and to the output power circuit is a DC-voltage. In such cases the control signal is duty cycle for PWM control of the output power circuit. To increase the output current the duty cycle has to be increased. To decrease the output current the duty cycle has to be decreased.

In an alternative embodiment of the invention the input voltage supplied to the reference voltage regulator and to the output power circuit is an AC-voltage. In such cases the control signal is a triggering angle. By adjusting the triggering angle of the AC-voltage the output current of the output power circuit could be adjusted. In such embodiment the output power circuit comprises a controlled rectifier for rectifying the supplied AC-voltage and an output filter for filtering the rectified half wave voltage resulting in a DC voltage. Further a zero cross detector is necessary to detect the zero crossing of the sinusoidal wave. The detected zero crossings are supplied to the microcontroller to be considered by applying the control signal in form of the triggering angle to the output power circuit. So the inventive circuit arrangement could be used for DC- or AC-input voltages.

The inventive method uses the steps of: supplying a reference voltage generated by a reference voltage regulator to a microcontroller; supplying a control signal outputted by the microcontroller to a output power circuit; supplying an output signal to an electrical device outputted by the microcontroller for controlling a status of the electrical device; supplying a switched power output voltage by the output power circuit having an output current required to drive the electrical device in the intended status in dependence of the control signal; determining the control signal within the microcontroller in dependence of the output signal applied to the electrical device.

The inventive circuit arrangement may be used advantageously in an elevator system having an elevator car driven in a hoistway, a main control unit communicating with a floor/car control unit arranged on a floor of a building or in the elevator car; at least one electrical device is arranged on the floor of a building or in the elevator car; the electrical device is controlled by the floor/car control unit, wherein the floor/car control unit comprising a circuit arrangement as described above and claimed in one of the claims 1 to 9.

Preferred embodiments of the invention are described in detail below, by way of example only, with reference to the following schematic drawings. In which:
- Fig. 1: shows a schematic drawing of an elevator system according to the invention;
- Fig. 2: shows a block diagram of a circuit arrangement according to the invention;
- Fig. 3: shows a more detailed block diagram as shown in fig. 2;
- Fig. 3a: shows an exemplary circuitry of an output power circuit;
- Fig. 4: shows a flow chart for adjusting a control signal according to the invention;
- Fig. 5: shows a block diagram of an alternative circuit arrangement according to the invention;
- Fig. 6: shows a realisation of the alternative circuit arrangement shown in fig. 5;
- Fig. 7: shows a prior art circuit arrangement for switched power supply.

The drawings are provided for illustrative purpose only and do not necessarily represent practical examples of the present invention to scale. In the following the various exemplary embodiments of the invention are described. Although the present invention is applicable in a broad variety of applications it will be described with the focus put on elevator systems. A further field for applying the invention might be escalators.

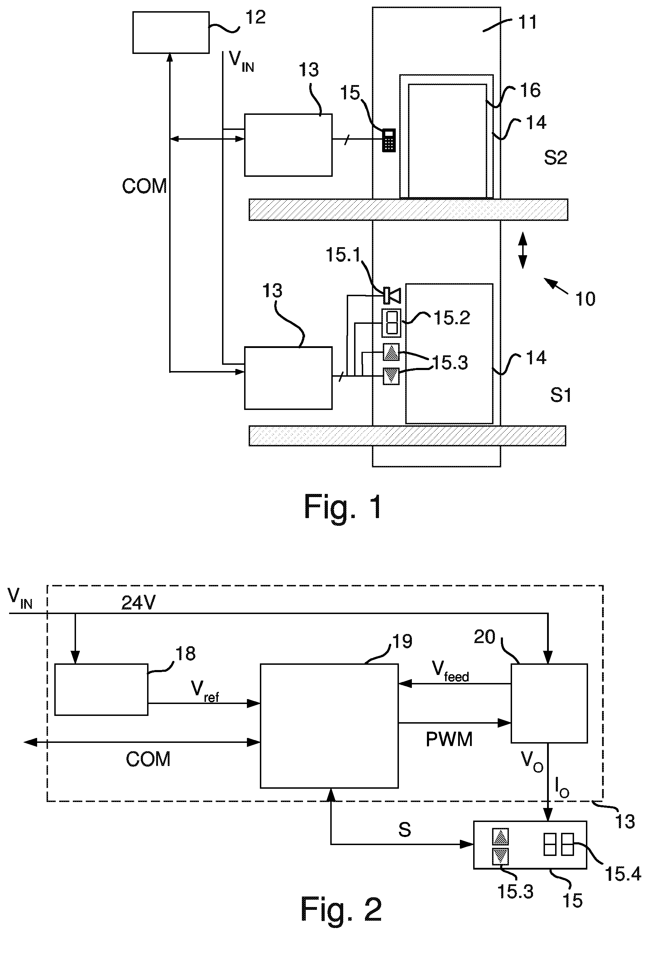

Referring to fig. 1, a schematic illustration of an elevator system 10 according to the present invention is shown. The elevator system 10 comprises a hoistway 11 having shaft doors 14. An elevator car 16 is moved in the hoistway 11 for carrying people or objects. There are several floors S1, S2 arranged in a building. In each floor S1, S2 there is a floor control unit 13. The floor control unit 13 is connected with a main control unit 12. The floor control units 13 receive an input voltage V_{IN} from a main power supply (not illustrated). For controlling the elevator car 16 several different electrical devices 15 are provided on the floors S1, S2. The electrical device 15 could be a keypad 15 as shown in floor S2. The keypad 15 is used for inputting a destination call. The destination call is transferred to the main control unit 12 via the floor control unit 13. After being processed an assigned elevator car 16 will be displayed to user on a display. Other electrical devices 15 are illustrated in floor S1. There are buttons 15.3 showing arrows for indicating the direction of travelling. The buttons 15.3 generate an input signal, which is transferred to the floor control unit 13. Further the buttons 15.3 are provided with LEDs indicating which direction is requested. Further there is a seven segment display 15.2 indicating the current position of the elevator car 16. A more detailed display having a double seven segment display 15.4 or a dot matrix display could be used instead. If the elevator car 16 is arriving on a certain floor S1, S2 a gong 15.1 may be activated to inform the passengers.

All electrical devices 15, 15.1, 15.2, 15.3, 15.4 have to be supplied with electrical energy. As mentioned above a switched power supply is very efficient in respect to the power consumption. In the following the energy efficiency in the cases of a conventional power supply compared with a switched power supply will be explained. Supposing there are 15 floors S1 - S15 using a double seven segment display 15.4. The current for a LED in the seven segment display is I_{led} = 3.5mA. The supply voltage provided to the floors is V = 24V. That results in a power consumption for 14 segments of P = 14 x 24V x 3.5mA = 1176mW per floor.

By using a switched power supply the supply voltage is stepped down to 5V.
This results in a power consumption for 14 segments of P = 14 x 5V x 3.5mA = 245mW per floor.

As mentioned above, there are 15 floors S1 - S15. Supposing the worst case that all LEDs of the double seven segment displays 15.4 are turned on the power consumption using a conventional power supply will be P = 15 x 1176mW = 17640mW for 15 floors. By using a switch power supply the voltage is stepped down to 5V on each floor resulting in a power consumption of P = 15 x 245mW = 3675mW. By considering a power supply efficiency of 80% the power consumption will be P = 3675/0.8 = 4594mW for 15 floors. So the energy gain is about (17640/4595) = 3.8 times. Summarizing the power consumption was reduced from 17.6W to 4.6W for 15 floors. In many cases the elevator systems have more than 15 floors. Further there are more electrical devices on the floors S1, S2 and in the elevator car 16. So the reduction which could be achieved by using a switched power supply will more obvious.

A schematically block diagram showing a circuit arrangement for providing a switched power supply to a electrical device 15, 15.3, 15.4 is illustrated in fig. 2. The circuit arrangement realized as a floor/car control unit 13 comprises a microcontroller 19 for controlling the electrical devices 15, 15.3, 15.4 by outputting an output signal S. Further there is a reference voltage regulator 18 coupled to the microcontroller 19 for supplying a reference voltage V_{ref} to the microcontroller 19. In the most cases the reference voltage V_{ref} is about 5V. An output power circuit 20 is coupled to the electrical device 15, 15.3, 15.4 for supplying a switched power output voltage V_{O} having a high output current I_{O} required to drive the electrical devices 15, 15.3, 15.4 in an intended status. The floor/car control unit 13 receives the input voltage V_{IN} from a main power control (not illustrated). This is a non-regulated voltage, e.g. 24V DC. The floor/car control unit 13 receives further control commands COM from main control unit 12, wherein the microcontroller 19 is also transmitting input signals from the electrical devices 15, 15.3, 15.4 to the main control unit 12. The microcontroller 19 is coupled to the output power circuit 20 to provide a control signal PWM. By using the control signal PWM the output current I_{O} of the output power circuit 20 is adjusted. The output power circuit 20 is generating the high output current I_{O} by using a PWM control, which is well known in the art. Further there is a feedback line supplying a feedback voltage V_{feed} from the output power circuit 20 to the microcontroller 19. The feedback voltage V_{feed} is used to fine adjust the output voltage V_{O}.

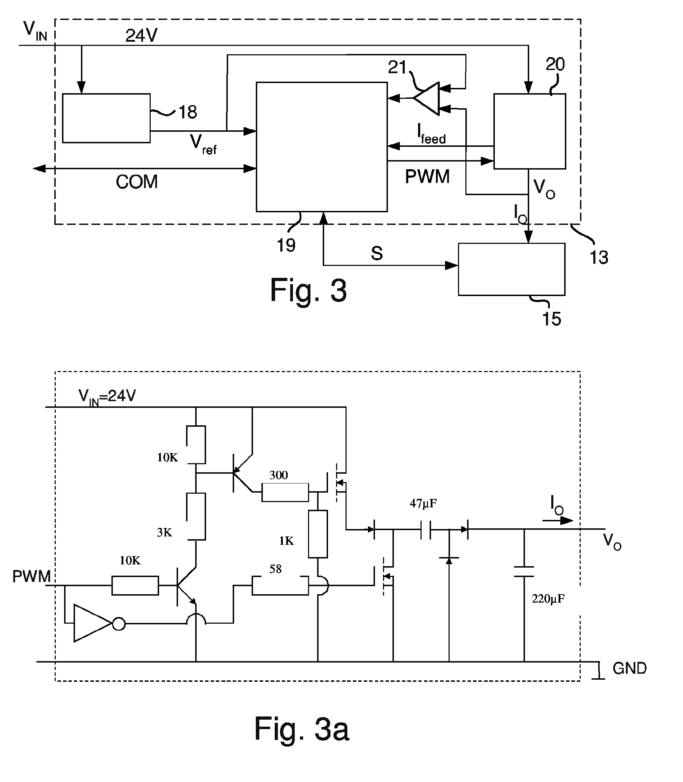

Before explaining the adjustment of the control signal PWM a more detailed floor/car control unit 13 is described referring to fig. 3. There is comparator 21 comparing the output voltage V_{O} and the reference voltage V_{ref}. The comparison result is supplied to the microcontroller 19. In this embodiment the output power circuit 20 provides also a current feedback I_{feed} to the microcontroller 19. This current feedback I_{feed} is used to detect an over current.

The circuit arrangement could be improved by using A/D converters (not illustrated) in front of the microcontroller 19. So the feedback signals V_{feed}, I_{feed} are converted into digital signals, wherein the microcontroller 19 can process the digital signals directly, e.g. without using a comparator 21. The microcontroller 19 can read the exact digital signal of the feedback voltage V_{feed} or feedback current I_{feed}. Thus, the microcontroller 19 can process the signals faster as using only compared results to correct the control signal PWM when the output voltage Vo is different from the desired reference voltage V_{ref}.

The microcontroller 19 can determine the required output current I_{O} needed when the electrical device 15 is switched into another status, by outputting a changed output signal S. At same time the output signal S changes the control signal PWM is changed to adjust the required output current I_{O} in the output power circuit 20.

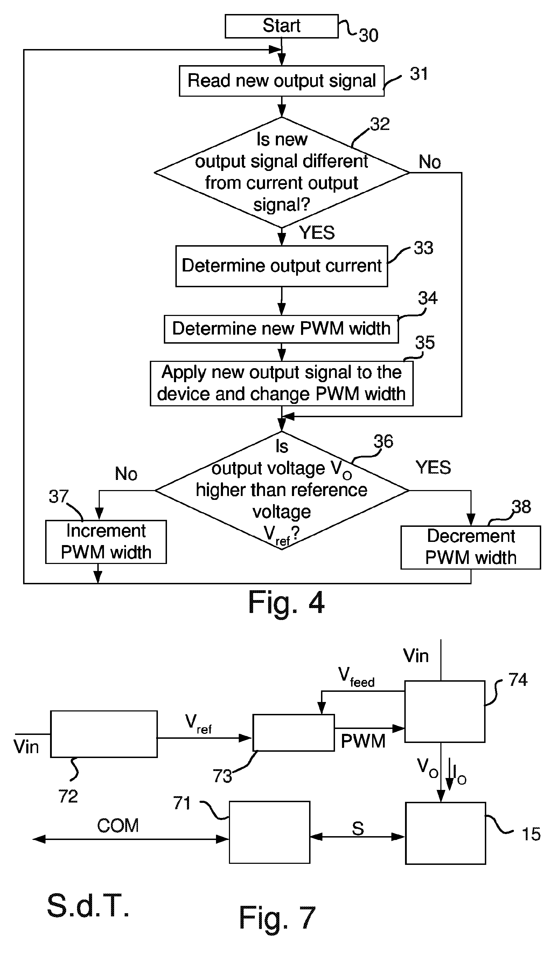

Referring to fig. 4 the procedure of adjusting the control signal PWM will be explained. The procedure starts at step 30. In the next step 31 a new output signal S is read. Then the new output signal S is compared with the currently used output signal S in step 32. If the new output signal S is the same as the currently used output signal S it proceeds in step 36. In step 36 the output voltage V_{O} is compared with the reference voltage V_{ref}, since a difference in the voltages V_{O} and V_{ref} indicates that the output current I_{O} is not correct. If the output voltage V_{O} is higher than the reference voltage V_{ref} the duty cycle of the control signal PWM is decremented in step 38. If the output voltage V_{O} is lower than the reference voltage V_{ref} the duty cycle of the control signal PWM is incremented in step 37. Then the procedure returns to step 31. If the new output signal S is different from the current output signal S in step 32 the required output current I_{O} is determined in step 33. Depending on the required output current I_{O} the PWM width for the control signal PWM is determined in step 34. After having determined the PWM width for the control signal PWM the new output signal S is applied to electrical device 15 and the new control signal PWM having the new PWM width is applied to the output power circuit 20.

The PWM width or duty cycles are stored in a look up table in the microcontroller 19. The stored PWM width values are mapped to corresponding output signals S. An exemplary look up table including a small number of mappings is shown below. The PWM width values can be determined experimentally or at power up outputting the required output signal S desired and waiting the stable value of PWM.

| Pattern | Output value S | PWM width value (duty cycle %) |
|---|---|---|
| No output | 0 led | 5 |
| Arrow Down | 1 led | 8 |
| Arrow Up | 1 led | 8 |
| "3" | 5 leds | 15 |
| "8" + Arrow Up | 8 leds | 20 |
| "88" + Arrow Up | 15 leds | 50 |

Following standard components could be used for realizing the low cost switched power supply. As reference voltage regulator 18 the component 7805 could be used providing a 5V regulated voltage. The microcontroller 19 could be a HC6808, which is able to provide a control signal PWM having a frequency of 2KHz. An exemplary circuit which could be used for the output power circuit 20 is shown in fig. 3a. As can be seen all components used for realizing the switched power supply are very cheap.

The disadvantage of generating a regulated PWM function with a microcontroller is the speed of providing the control signal. The implementation of a power control function in a microcontroller is slower than in dedicated analog circuits, e.g. it takes milliseconds using a microcontroller and microseconds with dedicated analog circuits. This slow setting of the control signal is not acceptable for many applications, but if the output currents are known this disadvantage can be compensated by using the inventive algorithm according to fig. 4. The algorithm uses a direct mapping between the duty cycle of the control signal and the output signal illuminated on the display 15.2 in the elevator. For instance, if the display 15.2 will show a "1" for floor S1, it means that 2 LEDs will be turned on. The PWM duty cycle of the control signal PWM is calculated and changed immediately to drive the output current I_{O} for 2 LEDs when the output signal S "1" is updated. If the display 15.2 is showing "8" + Arrow Up, it means that eight LEDs are turned on. The corresponding control signal PWM having a duty cycle of 20% could be read directly from the look up table.

The value of the control signal PWM to an initial duty cycle for each different display pattern can be determined at power up also. During continuous operation this duty cycle of the control signal PWM can be constantly updated for each output signal S or pattern with a learning process. The duty cycle of the control signal PWM can be stored in the look up table in a memory portion of the microcontroller 19.

By using the microcontroller 19 for providing the control signal PWM less software processing is required to produce a desired control signal PWM. Especially for the DC-DC switched power supply using the control signal PWM it is possible to produce a control signal PWM, having a very small duty cycle, so an improved control for small output currents I_{O} could be achieved.

Another advantage is the flexibility to define the frequency of the control signal PWM. By using a microcontroller 19 the frequency can be higher than 15 KHz. This allows the use of more compact components for realisation of the output power circuit 20.

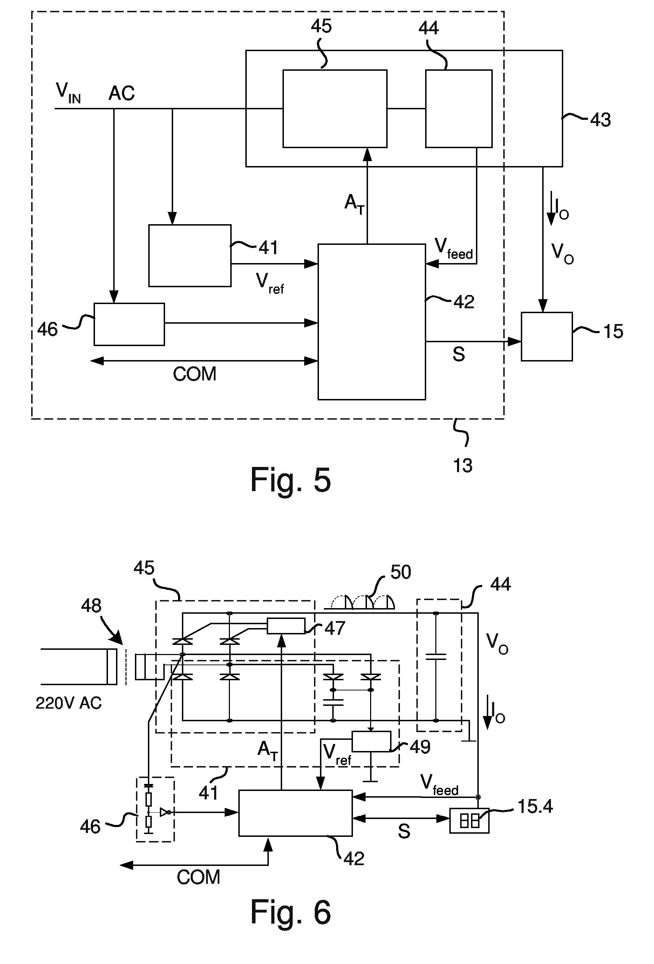

An alternative embodiment applying the invention is illustrated in fig. 5 and 6.

The application of the invention is not limited on the use of DC input voltage. It is also possible to supply an AC input voltage to the floor/car control unit 13. This alternative embodiment is represented schematically in fig. 5. The only difference to the embodiment supplied with DC input voltage as shown in fig. 2 and 3 is that the control signal AT is a triggering angle AT. The output power circuit 43 and the reference voltage regulator 41 are adopted to transform the AC input voltage correspondingly. Therefore the output power circuit 43 includes a controlled rectifier 45 for rectifying the supplied AC voltage and an output filter 44 for filtering the rectified voltage. Further there is a zero cross detector 46 arranged for detecting a zero cross of the AC voltage, wherein the zero cross is provided to the microcontroller 42. The microcontroller 42 provides the control signal AT to the controlled rectifier 45 for adjusting a triggering angle AT used for rectifying the AC-voltage.

An exemplary, more detailed circuit arrangement is given in fig. 6 including the used components. The AC input voltage V_{IN} is supplied to a transformer 48 for downscaling the inputted high transmission AC voltage, such as 220V AC. The low AC voltage provided on the secondary side of the transformer 48 is supplied to the controlled rectifier 45 and to the reference voltage regulator 41. The reference voltage regulator 41 comprises several diodes and capacitors, further a component 49 for voltage regulating, e.g. component 7805 providing a 5V DC voltage used as reference voltage V_{ref} supplied to the microcontroller 42. The controlled rectifier 45 comprises some diodes and controllable triacs or thyristors. The triacs or thyristors are controlled by a triac or thyristor control unit 47 for adjusting the triggering angle AT. The form of the rectified voltage signal 50 is illustrated between the controlled rectifier 45 and the output filter 44. The output filter 44 filters the cut halve wave AC voltage and provides the output voltage V_{O} to the electrical device 15. Further there is a zero cross detector 46 including a schmitt trigger circuit 7414.

The microcontroller 42 supplies the control signal AT to the output power circuit 43, wherein the mapping of different output signals S for controlling the electrical devices 15 and the required output currents I_{O} is stored in the microcontroller 42 in a look up table, as shown below.

The look up table for mapping the triggering or conducting angles AT to different output signals S is similar to the DC-DC switching power supply as explained above.

| Pattern | Output signal S | Triggering angle (degree) |
|---|---|---|
| No output | 0 led | 5 |
| Arrow Down | 1 led | 10 |
| Arrow Up | 1 led | 10 |
| "3" | 5 leds | 20 |
| "8" + Arrow Up | 8 leds | 80 |
| "88" + Arrow Up | 15 leds | 90 |

All examples are given for driving a double seven segment display 15.4, wherein it should be noted that each status of an electrical device 15 requires a certain output current I_{O}, which could be mapped in a look up table correspondingly.

An additional possibility is to convert a high transmission AC voltage into a DC non-regulated voltage by using a rectifier 45 and a filter 44 and then to use the DC-DC switching power supply as explained for fig. 2, 3.

Fig. 7 illustrates a conventional switched power supply using a PWM control circuit 73 realised as dedicated analog circuit for providing the control signal PWM to adjust the output current I_{O} of the output power circuit 74. Independent of the presence of the dedicated analog circuit 73 there is a microcontroller 71 controlling the statuses of the electrical devices 15 and reading input signals provided by the electrical devices 15. The microcontroller 71 performs the communication with a main control unit (not illustrated). The reference voltage V_{ref} is generated by a reference voltage regulator 72.

By using the inventive circuit arrangement for providing a switched power supply a reduced power consumption could be provided. Further the cable cross section could be reduced by using high transmission voltages. It is further possible to use a low cost microcontroller 19, 42 instead of using a dedicated analog circuit for providing the control signal PWM to adjust the output current I_{O} in the output power circuit 20. Since the microcontroller 19, 42 is providing the control signal PWM, AT the dedicated analog circuit 73 could be omitted, wherein also the area on the printed circuit boards PCB is saved. By using high transmission voltages low current connectors could be used.

## Claims

1. Circuit arrangement for providing a switched power supply to an electrical device (15) comprising:
- a microcontroller (19, 42) for controlling the electrical device (15);
- a reference voltage regulator (18, 41) coupled to the microcontroller (19, 42) for supplying a reference voltage (V_{ref});
- an output power circuit (20, 43) coupled to the electrical device (15) for supplying a switched power output voltage (V_{O}) having an output current (I_{O}) required to drive the electrical device (15) in an intended status;
- the microcontroller (19, 42) is coupled to the output power circuit (20, 43) for supplying a control signal (PWM, AT) and coupled to the electrical device (15) for supplying an output signal (S) for setting the electrical device (15) into the intended status, wherein the microcontroller (19, 42) is determining the control signal (PWM, AT) in dependence of the output signal (S) in order to determine the output current (I_{O}) of the output power circuit (20, 43) to supply the electrical device (15).

2. Circuit arrangement as claimed in claim 1, wherein the microcontroller (19, 42) is provided for determining the control signal (PWM, AT) if the output signal (S) is changed by the microcontroller (19, 42) to switch the electrical device (15) in another status.

3. Circuit arrangement as claimed in claim 1 or 2, wherein a feedback voltage (V_{feed}) is supplied by the output power circuit (20, 43) to the microcontroller (19, 42) for adjusting the control signal (PWM, AT) provided by the microcontroller (19, 42).

4. Circuit arrangement as claimed in one of the claims 1 to 3, wherein the microcontroller (19, 42) is connected to a main control unit (12) remotely arranged and providing a control command (COM) for controlling the status of the electrical device (15).

5. Circuit arrangement as claimed in one of the claims 1 to 4, wherein the reference voltage (V_{ref}) supplied by the reference voltage regulator (18, 41) is a low voltage reference signal (V_{ref}) and the switched power output voltage (V_{O}) supplied by the output power circuit (20, 43) is a low voltage, high current signal, wherein both are generated from an input voltage (V_{IN}) supplied to the reference voltage regulator (18, 41) and the output power circuit (20, 43).

6. Circuit arrangement as claimed in one of the claims 1 to 5, wherein a comparator (21) is arranged for comparing the switched power output voltage (V_{O}) with the reference voltage (V_{ref}), wherein a comparison result is supplied to the microcontroller (19, 42).

7. Circuit arrangement as claimed in one of the claims 1 to 6, wherein a mapping between different statuses of the electrical device (15) and the corresponding control signal (PWM, AT) are stored within the microcontroller (19, 42).

8. Circuit arrangement as claimed in claim 5, wherein the input voltage (V_{IN}) is a DC voltage and the control signal (PWM) is a duty cycle for PWM control of the output power circuit (20).

9. Circuit arrangement as claimed in claim 5, wherein the input voltage (V_{IN}) is an AC voltage, the output power circuit (43) comprises a controlled rectifier (45) for rectifying the supplied AC voltage and an output filter (44) for filtering the rectified voltage, a zero cross detector (46) is arranged for detecting a zero cross of the AC voltage, the zero cross is provided to the microcontroller (42), the microcontroller (42) provides the control signal (AT) for adjusting a triggering angle (AT) for rectifying the AC voltage in the controlled rectifier (45).

10. Method for providing a switched power supply to an electrical device (15) using a reference voltage regulator (18, 41), a microcontroller (19, 42) and an output power circuit (20, 43), the method comprising the steps of:
- supplying a reference voltage (V_{ref}) generated by the reference voltage regulator (18, 41) to the microcontroller (19, 42);
- supplying a control signal (PWM, AT) outputted by the microcontroller (19, 42) to the output power circuit (20, 43);
- supplying an output signal (S) to the electrical device (15) outputted by the microcontroller (19, 42) for controlling a status of the electrical device (15);
- supplying a switched power output voltage (V_{O}) by the output power circuit (20, 43) having an output current (I_{O}) required to drive the electrical device (15) in the intended status in dependence of the control signal (PWM, AT);
- determining the control signal (PWM, AT) within the microcontroller (19, 42) in dependence of the output signal (S) applied to the electrical device (15).

11. An elevator system (10) comprising: an elevator car (16) driven in a hoistway (11), a main control unit (12) communicating with a floor/car control unit (13) arranged on a floor (S1, S2) of a building or in the elevator car (16); at least one electrical device (15) arranged on the floor (S1, S2) or in the elevator car (16); the electrical device (15) being controlled by the floor/car control unit (13), wherein the floor/car control unit (13) comprises a circuit arrangement as claimed in one of the claims 1 to 9.
